(19) Europäisches Patentamt
European Patent Office
Office européen des brevets

(11) **EP 2 993 799 B1**

(12) **EUROPÄISCHE PATENTSCHRIFT**

(45) Veröffentlichungstag und Bekanntmachung des Hinweises auf die Patenterteilung:
**02.01.2019   Patentblatt 2019/01**

(51) Int Cl.:
*H04B 3/54* *(2006.01)*       *H04W 72/08* *(2009.01)*
*H04L 5/00* *(2006.01)*

(21) Anmeldenummer: **14183948.0**

(22) Anmeldetag: **08.09.2014**

(54) **Verfahren und Vorrichtung zur Verringerung von Störeinflüssen zwischen Netzvorrichtungen**

Method and device for reducing interference between network devices

Procédé et dispositif destiné à réduire des influences parasites entre des dispositifs de réseau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.03.2016   Patentblatt 2016/10**

(73) Patentinhaber: **Deutsche Telekom AG**
**53113 Bonn (DE)**

(72) Erfinder:
• **Kessler, Thomas**
  **34266 Niestetal (DE)**
• **Tudziers, Christoph**
  **64673 Zwingenberg (DE)**

(74) Vertreter: **Blumbach · Zinngrebe Patent- und Rechtsanwälte**
**PartG mbB**
**Alexandrastraße 5**
**65187 Wiesbaden (DE)**

(56) Entgegenhaltungen:
**WO-A2-2009/039439       WO-A2-2012/084221**

**Beschreibung**

Die Erfindung betrifft allgemein Kommunikationsnetzwerke und insbesondere ein Verfahren und eine Vorrichtung zur Verringerung von Störeinflüssen zwischen Netzvorrichtungen.

Mit stetig zunehmender Internetnutzung und einer zunehmend multimedialen Nutzung des Internets beispielsweise zur Übertragung von Fernsehprogrammen und Filmen per IPTV nimmt auch die Vernetzung in privaten Haushalten zu. Die Internetanbindung erfolgt aufgrund steigender Anforderungen an die Bandbreite heute in der Regel über Breitbandzugänge unter Einsatz von zum Beispiel DSL-Modems oder Kabelmodems. Ein bekanntes Breitband-Anschlusssystem für hohe Datenraten basiert auf der ADSL (Asymmetric Digital Subscriber Line)-Technologie, die unter Anderem durch die ITU-T-Empfehlung G.992.1 festgelegt ist. Noch höhere Datenraten als mit ADSL liefert die VDSL (Very High Speed Digital Subscriber Line)-Technologie, die beispielsweise durch die ITU-T-Empfehlungen G.993.1 und G.993.2 festgelegt ist, sowie die künftige G.fast (Fast Access to Subscriber Terminals)-Technologie, beispielsweise spezifiziert in den ITU-T-Empfehlungen G.9700 und der noch nicht veröffentlichten G.9701.

Ein lokales Netzwerk (LAN, Local Area Network) kann als Heimnetzwerk technisch unterschiedlich aufgebaut sein, wobei typischerweise eine Verkabelung mit einer Technologie basierend auf dem Ethernet-Standard erfolgt.

Um eine umfangreiche Verkabelung zu vermeiden, werden zunehmend auch drahtlose lokale Netze (WLAN, Wireless LAN) eingesetzt. Eine zusätzliche Alternative, die gerade in letzter Zeit zunehmend Verbreitung findet, ist eine Datenübertragung über die Stromleitung (Powerline Communication, PLC). Powerline-Modems werden in eine Steckdose gesteckt und beispielsweise über eine eingebaute Ethernet-Schnittstelle mit einem Endgerät verbunden. Das Datensignal vom angeschlossenen Endgerät wird vom Powerline-Modem im Hochfrequenzbereich, typischerweise zwischen 2 und 68 MHz, auf die Stromleitung moduliert und vom empfangenden Powerline-Modem wieder demoduliert. Powerline-Modems verwenden mit OFDM (Orthogonal Frequency Division Multiplexing) die gleiche Übertragungstechnik wie DSL und WLAN. Durch die Funktionsweise als Trägerfrequenzanlage wirken die stromdurchflossenen Leiter bei Einsatz von Powerline wie Antennen, die das hochfrequente Signal abstrahlen. Dadurch kann es prinzipiell zu wechselseitigen Störungen mit anderen Netzvorrichtungen kommen.

Mit zunehmender Bandbreite wird von den jeweiligen DSL-Technologien auch ein immer größerer Nutzfrequenzbereich verwendet. Wird bei ADSL noch ein Frequenzbereich von etwa Null bis etwa 1 MHz verwendet, so nutzt VDSL bereits Frequenzen bis etwa 30 MHz und G.fast bis etwa 100 MHz. Dadurch wird insbesondere das Problem von Störungen zwischen DSL- und Powerline-Modems verstärkt, da diese in überlappenden Frequenzbereichen arbeiten.

Wechselseitige Störungen von Geräten in einem lokalen Netzwerk, wie beispielsweise einem Heimnetzwerk, können dadurch reduziert oder beseitigt werden, dass das störende Gerät zunächst durch Ein- und Ausschalten potenziell störender Geräte identifiziert wird, und dann der verwendete Frequenzbereich oder die verwendete Sendeleistung des störenden Gerätes manuell angepasst wird.

Aus EP 2 744 117 A1 ist auch ein automatisches Verfahren zur Verringerung von Störeinflüssen in einem Kommunikationsnetzwerk bekannt, wobei ein gestörtes Netzwerksystem eine Steuerinformation über den Störfrequenzbereich zu potenziellen Störern in der Umgebung aussendet, beispielsweise als Rundsendung über einen drahtlos ausgebildeten besonderen Kommunikationskanal. Die potenziellen Störer, welche die Information über die Störung empfangen, reduzieren probeweise den Sendepegel, falls die gestörte Frequenz in deren Nutzfrequenzbereich fällt, wobei der Sendepegel beispielsweise sukzessive reduziert werden kann. Führt die Sendeleistungsreduzierung zu einer Reduzierung der Störung, so quittiert das ursprünglich gestörte Netzwerksystem dies durch eine entsprechende Erfolgsmeldung.

Da das sukzessive probeweise Reduzieren der Sendeleistung gegebenenfalls für jeden potenziellen Störer sowie für verschiedenen Frequenzbereiche wiederholt werden muss, kann das in EP 2 744 117 A1 beschriebene Verfahren insbesondere in Netzwerken mit vielen Netzwerkkomponenten sehr zeitaufwändig sein.

Störungen können auch zwischen benachbarten Kommunikationsnetzwerken, beispielsweise Heimnetzwerken in benachbarten Wohnungen, auftreten. Zum Beispiel kann ein DSL-Modem von einem Powerline-Modem in einer benachbarten Wohnung gestört werden. Für solche Störungen ist das in EP 2 744 117 A1 beschriebene Verfahren nicht einsetzbar, falls der drahtlose besondere Kommunikationskanal zum Übertragen der Steuerinformation aufgrund von Dämpfungseffekten durch baulich massive Ausführung von Decken und Wänden nicht aufgebaut werden kann.

Weitere Beispiele für Verfahren und Vorrichtungen zur Verringerung von Störeinflüssen zwischen Netzvorrichtungen nach dem Stand der Technik finden sich in WO 2012/084221 und WO 2009/039439.

Es ist daher die Aufgabe der vorliegenden Erfindung, einen Weg aufzuzeigen, wie die oben beschriebenen Nachteile im Stand der Technik reduziert oder vermieden werden können, und insbesondere einen Weg aufzuzeigen, wie Störeinflüsse zwischen Netzvorrichtungen, insbesondere auch zwischen Netzvorrichtungen benachbarter Kommunikationsnetzwerke, auf einfache und effiziente Weise verringert werden können.

Das oben genannte technische Problem wird zum Einen durch die Verfahrensschritte des Anspruchs 1 gelöst.

Danach wird ein Verfahren zur Verringerung von Störeinflüssen zwischen Netzvorrichtungen zur Verfügung gestellt. Eine Netzvorrichtung kann dabei jede Komponente eines Kommunikationsnetzwerkes sein, welche dazu ausgebildet sind, zur Datenübertragung Signale über ein zugeordnetes Übertragungsmedium zu senden und/oder zu empfangen. Beispielsweise kann eine Netzvorrichtung als DSL-Modem, Kabelmodem, Powerline-Modem, WLAN-Adapter oder auch als Router eines Heimnetzwerkes ausgebildet sein. Eine Netzvorrichtung kann aber beispielsweise auch als Endgerät, beispielsweise als Computer oder Smartphone, ausgebildet sein, welches seinerseits beispielsweise ein WLAN-Adapter umfasst.

Das erfindungsgemäße Verfahren sieht vor, dass durch wenigstens eine erste Netzvorrichtung ein Testsignal ausgesendet wird, welches durch wenigstens eine zweite Netzvorrichtung detektiert wird. Durch wenigstens eine der ersten und/oder der zweiten Netzvorrichtung zugeordnete Steuervorrichtung wird in Abhängigkeit des durch die zweite Netzvorrichtung detektierten Testsignals ein Störeinfluss der ersten Netzvorrichtung auf die zweite Netzvorrichtung erkannt und eine Reduzierung einer Sendeleistung der ersten Netzvorrichtung bewirkt.

Ein Kerngedanke der Erfindung besteht darin, eine Erkennung von Störeinflüssen zwischen Netzvorrichtungen auf verschiedenen Übertragungsmedien und eine Verringerung erkannter Störeinflüsse durch Reduzierung der Sendeleistung störender Netzvorrichtungen mittels einer oder mehrerer zentraler Steuervorrichtungen zu koordinieren, wobei insbesondere auch eine gemeinsame Koordination von Netzvorrichtungen in separaten Kommunikationsnetzwerken ermöglicht wird.

Die erste und die zweite Netzvorrichtung können an dasselbe Kommunikationsnetzwerk angeschlossen sein, oder auch jeweils an separate Kommunikationsnetzwerke, wobei im letzteren Fall die erste und die zweite Netzvorrichtung typischerweise derart angeordnet sind, dass sie nicht miteinander kommunizieren können. An jedes Kommunikationsnetzwerk, an dem eine am Verfahren beteiligte Netzvorrichtung angeschlossen ist, ist wenigstens eine Steuervorrichtung angeschlossen. Eine Steuervorrichtung kann an ein oder an mehrere separate Kommunikationsnetzwerke angeschlossen sein. Insbesondere kann vorteilhaft an jedes von mehreren separaten Kommunikationsnetzwerken jeweils eine Steuervorrichtung angeschlossen sein. Eine Steuervorrichtung ist jeweils den an dasselbe Kommunikationsnetzwerk angeschlossenen Netzvorrichtungen zugeordnet und ist dazu ausgebildet, mit den zugeordneten Netzvorrichtungen über das Kommunikationsnetzwerk zu kommunizieren. Mehrere an dasselbe Kommunikationsnetzwerk angeschlossene Steuervorrichtungen sind typischerweise nicht vorgesehen. Dies wäre jedoch auch denkbar, wobei in diesem Fall vorzugsweise jede der an dieses Kommunikationsnetzwerk angeschlossenen Netzvorrichtungen jeweils nur einer der Steuervorrichtungen zugeordnet ist. Sind mehrere Steuervorrichtungen vorgesehen, so sind diese derart angeordnet, dass sie miteinander kommunizieren können.

Vorzugsweise erkennt jede der Steuervorrichtungen zugeordnete Netzvorrichtungen, d.h. Netzvorrichtungen, welche an dasselbe Kommunikationsnetzwerk angeschlossen sind, automatisch, wobei das Erkennen einer Netzvorrichtung durch eine zugeordnete Steuervorrichtung beispielsweise unter Ansprechen auf ein von der jeweiligen Netzvorrichtung gesendetes Registrierungssignal erfolgen kann. Vorzugsweise ist zu diesem Zweck jede der Netzvorrichtungen dazu ausgebildet, in zyklischen Zeitabständen entsprechende Registrierungssignale zu senden. Sind mehrere Steuervorrichtungen vorgesehen, so tauschen diese vorzugsweise untereinander Informationen zu jeweils erkannten Netzvorrichtungen aus. Auf diese Weise verfügt jede der Steuervorrichtungen über eine vollständige Liste aller erkannter Netzvorrichtungen.

Vorzugsweise wird durch das Verfahren die Sendeleistung einer Mehrzahl von Netzvorrichtungen koordiniert, insbesondere, wenn Netzvorrichtungen mehrere separater Kommunikationsnetzwerke koordiniert werden. In einer bevorzugten Ausführungsform des Verfahrens ist daher vorgesehen, dass nacheinander jede einer Mehrzahl von Netzvorrichtungen ein Testsignal aussendet, wobei während des Aussendens durch die jeweilige Netzvorrichtung die übrigen der Mehrzahl von Netzvorrichtungen jeweils ihren Signalempfang überwachen und selbst keine Aussendung durchführen.

Die Koordination durch die eine oder die mehreren Steuervorrichtungen erfolgt vorzugsweise mittels Steuersignalen, welche die Steuervorrichtungen zu den jeweils zugeordneten Netzvorrichtungen übertragen. Dementsprechend erfolgt das Aussenden des Testsignals durch die wenigstens eine erste Netzvorrichtung vorzugsweise unter Ansprechen auf ein von der jeweils zugeordneten Steuervorrichtung empfangenes Aufforderungssignal zum Aussenden eines Testsignals, und das Detektieren des Testsignals durch die wenigstens eine zweite Netzvorrichtung erfolgt vorzugsweise unter Ansprechen auf ein von der jeweils zugeordneten Steuervorrichtung empfangenes Aufforderungssignal zum Ausführen eines Testempfangs.

Sind mehrere Steuervorrichtungen vorgesehen, führen die Steuervorrichtungen vorzugsweise einmalig oder in vorgegebenen Zeitabständen eine wechselseitige Synchronisierung durch, um sicherzustellen, dass die zweite Netzvorrichtung ihren Signalempfang überwacht, während die erste Netzvorrichtung das Testsignal aussendet, und um beispielsweise zu vermeiden, dass zwei Netzvorrichtungen, die unterschiedlichen Steuervorrichtungen zugeordnet sind, zeitgleich ein Testsignal aussenden.

Das Aussenden des Testsignals durch die wenigstens eine erste Netzvorrichtung umfasst vorteilhaft ein Aussenden eines Testsignals in einem vordefinierten Zeitfenster und mit einer vorgegebenen spektralen Sendeleistungsdichte. Das Testsignal umfasst vorzugsweise Signalanteile im gesamten Betriebsfrequenzbereich der ersten Netzvorrichtung, wobei als spektrale Sendeleistungsdichte beispielsweise die jeweilige maximale oder eine aktuell für den Betrieb festgelegte Betriebssendeleistungsdichte vorgegeben wird. Dementsprechend umfasst das Detektieren des Testsignals durch die wenigstens eine zweite Netzvorrichtung das Unterbinden von Aussendungen und das Detektieren einer spektralen Empfangsleistungsdichte in dem vordefinierten Zeitfenster. Das Zeitfenster hat vorzugsweise eine Dauer im Millisekundenbereich, insbesondere zwischen 1 und 10 Millisekunden. Eine solche Zeitdauer ist für die meisten Arten von Netzvorrichtungen ausreichend, um in Abhängigkeit des durch die zweite Netzvorrichtung detektierten Testsignals einen Störeinfluss der ersten Netzvorrichtung zu erkennen. Es sei angemerkt, dass das Zeitfenster in Abhängigkeit der konkreten Ausgestaltung der beteiligten Netzvorrichtungen, insbesondere deren jeweiliger Signalverarbeitungsgeschwindigkeit, auch länger oder kürzer gewählt werden kann. Ferner kann das Zeitfenster kürzer gewählt werden, um das Verfahren zu beschleunigen, oder länger gewählt werden, um die Detektionsgenauigkeit zu erhöhen oder um die Anforderungen an eine Synchronität der Steuervorrichtungen zu verringern.

Das Verfahren sieht insbesondere vor, einen Störeinfluss auf die Datenübertragung über individuelle Übertragungskanäle zwischen jeweils zwei Netzvorrichtungen zu erkennen. Zu diesem Zweck erfolgt das Aussenden des Testsignals durch die erste Netzvorrichtung vorzugsweise als Rundsendung (Punkt zu Multipunkt), d.h. an alle mit der ersten Netzvorrichtung über jeweilige Übertragungskanäle verbindbare weitere Netzvorrichtungen, wobei die erste Netzvorrichtung ferner vorzugsweise jeweils eine spektrale Übertragungsfunktion der Übertragungskanäle ermittelt.

Für eine Koordinierung der Leistungsreduktion durch die Steuervorrichtungen überträgt die erste Netzvorrichtung vorteilhaft Informationen über die spektrale Sendeleistungsdichte des ausgesendeten Testsignals und/oder Informationen über ermittelte spektrale Übertragungsfunktionen von Übertragungskanälen zwischen der ersten Netzvorrichtung und wenigstens einer weiteren Netzvorrichtung zu der jeweils zugeordneten Steuervorrichtung.

Jede der zweiten Netzvorrichtungen überträgt entsprechend vorteilhaft Informationen über die jeweils detektierte spektrale Empfangsleistungsdichte zu der jeweils zugeordneten Steuervorrichtung, wobei das Erkennen eines Störeinflusses durch die wenigstens eine Steuervorrichtung in Abhängigkeit der empfangenen Informationen über detektierte spektrale Empfangsleistungsdichten der Netzvorrichtungen erfolgt.

Es sei angemerkt, dass bei Einsatz mehrerer Steuervorrichtungen, diese untereinander auch die jeweils empfangenen Informationen über gesendete spektrale Sendeleistungsdichten und/oder spektrale Übertragungsfunktionen und/oder detektierte spektrale Empfangsleistungsdichten der jeweils zugeordneten Netzvorrichtungen austauschen.

Zum Bewirken einer Reduzierung der Sendeleistung der ersten Netzvorrichtung in Abhängigkeit eines erkannten Störeinflusses wird zu der ersten Netzvorrichtung von der jeweils zugeordneten Steuervorrichtung vorteilhaft ein entsprechendes Aufforderungssignal zur Leistungsreduktion übertragen. Unter Ansprechen auf das Empfangen dieses Aufforderungssignal zur Leistungsreduktion reduziert die erste Netzvorrichtung vorteilhaft die Sendeleistung im Kommunikationsbetrieb in einem definierten Frequenzbereich um ein festgelegtes Maß.

In einer vorteilhaften Ausführungsform des Verfahrens wird zur Erkennung eines Störeinflusses und/oder zum Festlegen des Maßes der Leistungsreduktion durch die zugeordnete Steuervorrichtung ein Störabstand ermittelt und mit einem vorgegebenen Schwellwert verglichen.

Da die Netzvorrichtungen vorteilhaft nacheinander Testsignale aussenden, während die übrigen Netzvorrichtungen jeweils ihren Signalempfang überwachen, werden vorzugsweise die oben für die erste Netzvorrichtung beschriebenen Verfahrensschritte auch durch die zweite Netzvorrichtung ausgeführt, d.h. die zweite Netzvorrichtung sendet ein Testsignal aus und ermittelt spektrale Übertragungsfunktionen zu Übertragungskanälen zwischen der zweiten Netzvorrichtung und weiteren Netzvorrichtungen.

Das Ermitteln des Störabstands erfolgt besonders vorteilhaft bezüglich eines Übertragungskanals der zweiten Netzvorrichtung, und zwar insbesondere in Abhängigkeit einer von der zweiten Netzvorrichtung für den Kommunikationsbetrieb über einen individuellen Übertragungskanal vorgesehenen, beispielsweise maximalen, spektralen Sendeleistungsdichte, einer spektralen Übertragungsfunktion des entsprechenden Übertragungskanals und einer von der zweiten Netzvorrichtung detektierten spektralen Empfangsleistungsdichte, die während des Aussendens eines Testsignals durch die erste Netzvorrichtung detektiert wurde. Wie oben beschrieben werden die zum Ermitteln des Störabstandes erforderlichen Parameter von der zweiten Netzvorrichtung zu der jeweils zugeordneten Steuervorrichtung übertragen.

Liegt der Störabstand unterhalb des vorgegebenen Schwellwertes, wird ein Störeinfluss erkannt und als Maß der Leistungsreduktion vorzugsweise die Differenz aus Schwellwert und ermitteltem Störabstand festgelegt. Es sei angemerkt, dass der Störabstand vorzugsweise frequenzabhängig ermittelt und dementsprechend auch das Maß der Leistungsreduktion frequenzabhängig festgelegt wird.

In einer vorteilhaften Ausführungsform des Verfahrens ist ferner vorgesehen, dass jede der Netzvorrichtungen unter Ansprechen auf ein von der jeweils zugeordneten Steuervorrichtung empfangenes Aufforderungssignal eine Referenzmessung des spektralen Störhintergrundes durchführt und das Ergebnis der jeweils zugeordneten Steuervorrichtung übermittelt, wobei während der Referenzmessung keine der Netzvorrichtungen eine Aussendung durchführt.

Auf Grundlage einer solchen Referenzmessung kann vorteilhaft durch einen direkten Vergleich mit einer während der Aussendung eines Testsignals detektierten Empfangsleistungsdichte erkannt werden, ob ein Störeinfluss vorliegt. Die Ergebnisse der Referenzmessungen werden daher ebenfalls vorzugsweise zu den jeweils zugeordneten Steuervorrichtungen übertragen.

Die erste und zweite Netzvorrichtung können jeweils auch zur Kommunikation auf unterschiedlichen Übertragungsmedien ausgebildet sein. So kann beispielsweise die erste Netzvorrichtung ein Powerline-Modem sein, welches die Stromleitung als Übertragungsmedium verwendet, und die zweite Netzvorrichtung ein DSL-Modem, welches über eine Zweidrahtleitung als Übertragungsmedium mit einem DSLAM kommuniziert.

Das oben genannte technische Problem wird auch durch eine Netzvorrichtung mit den Merkmalen des Anspruchs 17 gelöst.

Dementsprechend ist eine Netzvorrichtung vorgesehen, welche eine erste Kommunikationsschnittstelle zur Kommunikation mit anderen, an ein gemeinsames Kommunikationsnetzwerk angeschlossenen Netzvorrichtungen, sowie eine zweite Kommunikationsschnittstelle zur Kommunikation mit einer Steuervorrichtung umfasst. Die Netzvorrichtung ist dazu ausgebildet, unter Ansprechen auf Steuersignale, welche die Netzvorrichtung von der Steuervorrichtung über die zweite Kommunikationsschnittstelle empfängt, Testsignale über die erste Kommunikationsschnittstelle auszusenden und/oder von einer anderen Netzvorrichtung ausgesendete Testsignale über die erste Kommunikationsschnittstelle zu detektieren.

Die Netzvorrichtung ist insbesondere derart ausgebildet, dass sie in dem oben beschriebenen Verfahren als erste und/oder zweite Netzeinrichtung einsetzbar ist.

Ferner wird das oben genannte technische Problem durch eine Steuervorrichtung gemäß Anspruch 18 gelöst.

Danach ist eine Steuervorrichtung vorgesehen, welche eine erste Kommunikationsschnittstelle zur Kommunikation mit Netzvorrichtungen in einem Kommunikationsnetzwerk umfasst, wobei die Steuervorrichtung dazu ausgebildet ist, ein Aussenden eines Testsignals durch eine erste Netzvorrichtung zu bewirken, einen Störeinfluss der ersten Netzvorrichtung auf eine zweite Netzvorrichtung in Abhängigkeit eines durch die zweite Netzvorrichtung detektierten Testsignals zu erkennen, und eine Reduzierung einer Sendeleistung der ersten Netzvorrichtung in Abhängigkeit des erkannten Störeinflusses zu bewirken.

Vorteilhaft umfasst die Steuervorrichtung eine zweite Kommunikationsschnittstelle zur Kommunikation mit einer weiteren Steuervorrichtung, welche nicht an dasselbe Kommunikationsnetzwerk angeschlossen ist.

Die Steuervorrichtung ist insbesondere derart ausgebildet, dass sie als Steuervorrichtung in dem oben beschriebenen Verfahren einsetzbar ist.

Das oben genannte technische Problem wird weiterhin durch ein Kommunikationssystem gemäß Anspruch 20 gelöst, welches wenigstens zwei oben beschriebene Netzvorrichtungen und wenigstens eine oben beschriebene Steuervorrichtung umfasst, wobei das Kommunikationssystem insbesondere zum Durchführen des oben beschriebenen Verfahrens ausgebildet ist.

Es sei insbesondere angemerkt, dass auch Ausführungsformen von Netzvorrichtungen und Steuervorrichtungen im Rahmen der Erfindung liegen, welche derart ausgebildet sind, dass sie zum Durchführen der unterschiedlichen Ausführungsformen des oben beschriebenen Verfahrens einsetzbar sind.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:

Fig. 1     eine schematische Darstellung einer bevorzugten Ausführungsform eines erfindungsgemäßen Kommunikationssystems,

Fig. 2     beispielhaft für ausgewählte Komponenten des in Fig. 1 dargestellten Kommunikationssystems eine schematische Darstellung eines zeitlichen Ablaufs von zwischen diesen Komponenten ausgetauschten Signalen zur Durchführung einer bevorzugten Ausführungsform eines erfindungsgemäßen Verfahrens,

Fig. 3     eine schematische Darstellung eines ersten beispielhaften Übertragungskanals, für den ein Störabstand ermittelt wird, und

Fig. 4     eine schematische Darstellung eines zweiten beispielhaften Übertragungskanals, für den ein Störabstand ermittelt wird.

Die Erfindung sieht zur Verringerung von Störeinflüssen zwischen Netzvorrichtungen gegenüber dem Stand der Technik eine Einführung einer oder mehrerer zentraler Steuervorrichtungen vor, die Funktionen zur Koordinierung der Netzvorrichtungen übernehmen, sowie das Aussenden von Testsignalen zur Ermittlung der Verkopplungen, d.h. wechselseitiger Störeinflüsse, zwischen den Netzvorrichtungen.

Die Steuervorrichtungen können insbesondere als Gateway zwischen separaten Kommunikationsnetzwerken vermitteln, um auch Netzvorrichtungen zu koordinieren, die in separaten Kommunikationsnetzwerken angeordnet sind und nicht direkt miteinander kommunizieren können.

Im Gegensatz zu dem beispielsweise aus EP 2 774 117 A1 bekannten Verfahren zur Verminderung von Störeinflüssen, bei welchem eine spektrale Sendeleistungsdichte reaktiv und vorwiegend in schmalen Frequenzbereichen vermindert wird, ermöglicht die Erfindung eine effiziente zentrale Koordinierung insbesondere von Netzvorrichtungen mit breitbandigen Nutzspektren, die sich über einen größeren Frequenzbereich gegenseitig beeinflussen können.

Vorteilhaft sieht die Erfindung vor, in Kommunikationsnetzwerke, zum Beispiel innerhalb eines Gebäudes, eine oder mehrere zentrale Steuervorrichtungen so einzufügen, dass sie die Kommunikation zwischen zwei getrennten Kommunikationsnetzen gewährleisten, so dass alle Sendeeinheiten, zum Beispiel Powerline- oder DSL-Modems, im Gebäude untereinander koordiniert werden können.

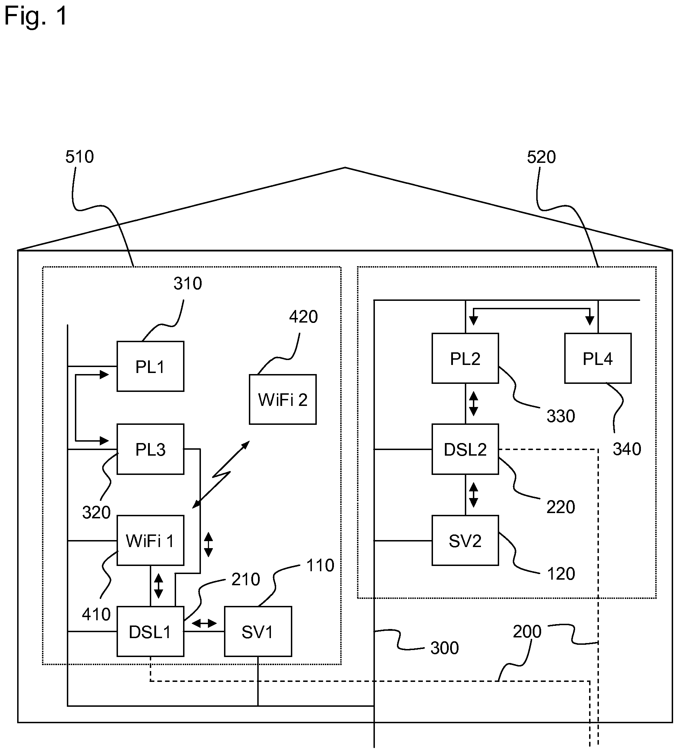

In Fig. 1 ist ein beispielhaftes Kommunikationssystem mit zwei separaten Kommunikationsnetzwerken 510 und 520 in zwei benachbarten Wohnungen eines Gebäudes dargestellt. Im dargestellten Ausführungsbeispiel ist an jedes der Kommunikationsnetzwerke 510 und 520 jeweils eine Steuervorrichtung 110 bzw. 120 angeschlossen.

Im dargestellten Ausführungsbeispiel umfasst das erste Kommunikationsnetzwerk 510 neben der Steuervorrichtung 110 ein DSL-Modem 210, zwei Powerline-Modems 310 und 320, sowie eine WLAN-Basisstation 410, wobei die genannten Komponenten miteinander verbunden sind, so dass diese ein erstes lokales Netzwerk bilden. Beispielsweise ist die WLAN-Basisstation 410 direkt mit dem DSL-Modem 210 verbunden, wobei die WLAN-Basisstation 410 und das DSL-Modem 210 insbesondere auch im selben Gehäuse angeordnet sein können. Ferner ist das Powerline-Modem 320 beispielsweise über Ethernet-Kabel mit dem DSL-Modem 210 verbunden, während die Powerline-Modems 310 und 320 über das Stromnetz 300 miteinander verbunden sind. Ferner ist im dargestellten Ausführungsbeispiel die Steuervorrichtung 110 mit dem DSL-Modem 210 direkt verbunden. Über die WLAN-Basisstation 410 können WLAN-fähige Endgeräte drahtlos an das lokale Netzwerk angebunden werden. Beispielhaft ist ein WLANfähiges Notebook 420 im Akkubetrieb dargestellt.

Das zweite Kommunikationsnetzwerk 520 umfasst im dargestellten Ausführungsbeispiel neben der Steuervorrichtung 120, ein DSL-Modem 220, sowie zwei Powerline-Modems 330 und 340, wobei beispielsweise das Powerline-Modem 330 über ein Ethernet-Kabel mit dem DSL-Modem 220 verbunden und die Powerline-Modems 330 und 340 untereinander über das Stromnetz 300 verbunden sind. Die Steuervorrichtung 120, das DSL-Modem 220 und die Powerline-Modems 330 und 340 bilden ein zweites, vom ersten unabhängiges lokales Kommunikationsnetzwerk.

Zur Anbindung an ein WAN (Wide Area Network) und typischerweise an das Internet sind die DSL-Modems 210 und 220 jeweils über eine Zweidrahtleitung 200 mit einem DSLAM verbunden. Die DSL-Modems 210 und 220 können vorteilhaft als DSL-Router ausgebildet sein.

Es sei angenommen, dass eine drahtlose Kommunikation zwischen den Kommunikationsnetzwerken 510 und 520 aufgrund baulicher Gegebenheiten dämpfungsbedingt nicht möglich ist.

Die Steuervorrichtungen 110 und 120 können untereinander direkt oder über das WAN miteinander kommunizieren. Für die direkte Kommunikation werden Signale benutzt, die trotz Übertragungsdämpfung von der jeweils anderen Steuervorrichtung erkannt werden können. Im dargestellten Beispiel sind die Steuervorrichtungen 110 und 120 dazu ausgebildet, miteinander über das Stromnetz 300 zu kommunizieren und umfassen dementsprechend die Funktionalität eines Powerline-Modems. Es sei angemerkt, dass die Steuervorrichtungen 110 und 120 nicht dazu ausgebildet sind, eine Kommunikation zwischen einem der Powerline-Modems 310 oder 320 und einem der Powerline-Modems 330 oder 340 zu ermöglichen.

Zur Verringerung von Störeinflüssen zwischen den Netzvorrichtungen 210, 220, 310, 320, 330, 340, 410 und 420 koordinieren die Steuervorrichtungen 110 und 120 die Sendeleistungen der Netzvorrichtungen, wobei im dargestellten Ausführungsbeispiel, vereinfachend zusammengefasst, die folgenden fünf Schritte von den Steuervorrichtungen 110 und 120 ausgeführt werden:

1. Erkennung aller Sendeeinheiten im Gebäude (Discovery),
2. Steuerung von Testsignalaussendungen,
3. Auswertung aller Testempfangssignale,
4. Anwenden einer vorgegebenen Policy zum Ermitteln, welche Netzvorrichtung die Sendeleistung wieweit reduzieren soll,
5. Senden von Anweisungen an Netzvorrichtungen, die Sendeleistung zu reduzieren.

Es sei angemerkt, dass das Verfahren auch nur für eine Untergruppe der in Fig.1 dargestellten Netzvorrichtungen ausgeführt werden kann. Insbesondere kann es vorteilhaft sein, die über WLAN kommunizierenden Komponenten 410 und 420 nicht mit einzubeziehen, da diese aufgrund der verwendeten Übertragungsfrequenzen im GHz-Bereich in der Regel keine Störungen bei DSL- oder Powerline-Modems verursachen.

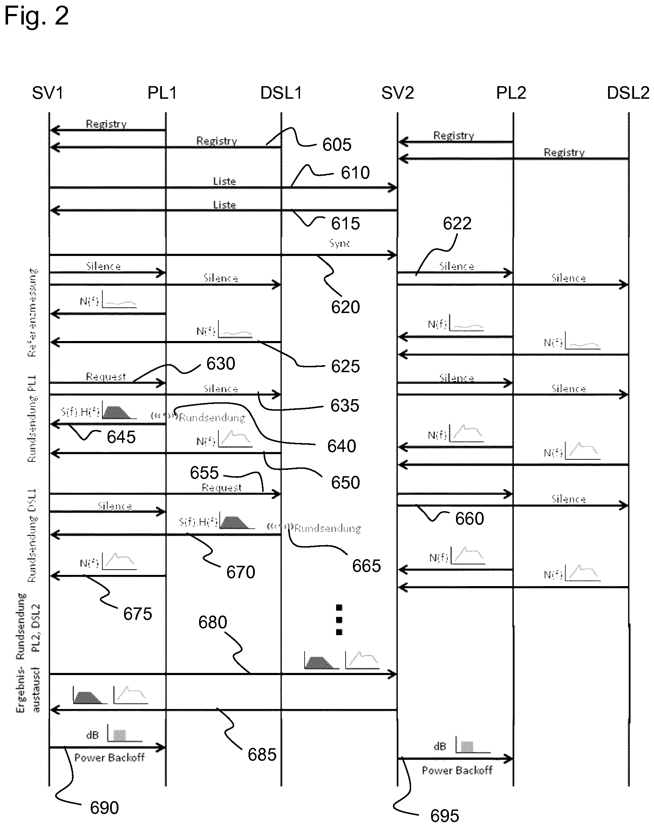

Im Folgenden werden die obigen Schritte unter Bezugnahme auf Fig. 2 näher beschrieben. In Fig. 2 ist schematisch von oben nach unten ein zeitlicher Ablauf dargestellt, wobei jeweils die zwischen den in Fig. 1 dargestellten Komponenten ausgetauschten Signale zur Durchführung des Verfahrens dargestellt sind. Für eine einfachere Darstellung ist in Fig. 2 nur die Kommunikation zwischen den Steuervorrichtungen 110 und 220, in Fig. 2 kurz als SV1 bzw. SV2 bezeichnet, den DSL-Modems 210 und 220, in Fig. 2 kurz als DSL1 bzw. DSL2 bezeichnet, und den Powerline-Modems 310 und 330, in Fig. 2 kurz als PL1 und PL2 bezeichnet, dargestellt. Die Kommunikation mit weiteren Netzvorrichtungen erfolgt in analoger Weise, wobei dem Fachmann auf der Basis der vorliegenden Beschreibung ohne Weiteres ersichtlich ist, wie die in Fig. 2 dargestellte Kommunikation zu erweitern ist.

Schritt 1:

Alle als Sendeeinheiten wirkenden Netzvorrichtungen senden in regelmäßigen Abständen ein Erkennungssignal (Registry) 605, das von der jeweils zugeordneten Steuervorrichtung SV1 bzw. SV2 erkannt wird, um eine Liste aller in einem Gebäude betriebenen Sendeeinheiten und damit potenziellen Störquellen zu erstellen. Im dargestellten Ausführungsbeispiel wirken alle Netzvorrichtungen 210, 220, 310, 320, 330, 340, 410 und 420 als Sendeinheiten und werden dementsprechend erfasst. Vorteilhaft werden die erkannten Netzvorrichtungen in die Liste jeweils mit einer eindeutigen Identifikationsnummer wie zum Beispiel der MAC-Adresse aufgenommen.

Die Steuervorrichtungen SV1 und SV2 tauschen ihre Listen mittels entsprechende Datenübertragungen 610 und 615 aus, so dass jede Steuervorrichtung über eine vollständige Liste verfügt. Vorzugsweise verständigen sich die Steuervorrichtungen SV1 und SV2 derart, dass die erkannten Netzvorrichtungen in beiden Listen die gleiche Reihenfolge aufweisen.

Schritt 2:

Nach einem Synchronisationssignal (Sync) 620 beginnt der Testdurchlauf mit einer Referenzmessung, bei der keine Netzvorrichtung sendet und alle Netzvorrichtungen die Empfangsleistungsdichte messen. Damit können Störungen erkannt werden, die nicht von den erkannten Netzvorrichtungen der Kommunikationsnetzwerke 510 und 520 im Gebäude hervorgerufen werden, sondern von zum Beispiel in Betrieb befindlichen Schaltnetzteilen von Ladegeräten.

Zu diesem Zweck senden die Steuervorrichtungen ein Silence-Signal 622 an alle Netzvorrichtungen, und alle Netzvorrichtungen signalisieren ihre Empfangsleistungsdichte an die jeweils zugeordnete Steuervorrichtung in Form eines jeweiligen Frequenzgangs N(f) (N=Noise).

Die Steuervorrichtungen senden dann an jede einzelne Netzvorrichtung hintereinander ein Request-Signal. In Fig. 2 sind beispielhaft das Request-Signal 630 von SV1 an PL1 und das Request-Signal 655 von SV1 an DSL1 dargestellt. Durch das Request-Signal wird die jeweilige Netzvorrichtung aufgefordert, eine Testaussendung als Rundsendung im gesamten Betriebsfrequenzbereich mit einer definierten spektralen Sendeleistungsdichte, zum Beispiel der maximalen Betriebssendeleistungsdichte auf dem eigenen Medium in einem zugewiesenen Zeitschlitz zu senden, d.h. zum Beispiel Powerline-Modems senden auf der Stromleitung, DSL-Modems senden auf der Zweidrahtleitung, WLAN-Komponenten senden auf der Luftschnittstelle. In Fig. 2 sind beispielhaft die von PL1 und DSL1 ausgeführten Testaussendungen 640 bzw. 665 dargestellt. Der Frequenzgang der Testsendeleistungsdichte S(f) sowie die Übertragungsfunktion H(f) des eigenen Kommunikationskanals werden von der jeweiligen Netzvorrichtung der jeweils zugeordneten Steuervorrichtung mitgeteilt, in Fig. 2 beispielhaft durch die Signale 645 und 670 für PL1 bzw. DSL 1 dargestellt. An alle anderen Netzvorrichtungen im Gebäude wird ein Silence-Signal 635 gesendet, so dass diese in dem zugewiesenen Zeitschlitz, welcher beispielsweise eine Dauer im Millisekundenbereich hat, nicht senden, sondern "hören", ob sie ein nennenswertes Störsignal empfangen. Den Frequenzgang der Testempfangsleistungsdichte N(f) melden die Netzvorrichtungen über beispielhaft mit 650 und 675 bezeichnete Signale der jeweils zugeordneten Steuervorrichtung. Die Steuervorrichtungen tauschen untereinander die Frequenzgänge der Sende- und Empfangsleistungsdichten über die Signale 680 und 685 aus.

Schritte 3 und 4:

Wenn alle Sendeeinheiten eine Rundsendung hintereinander in dem ihnen zugewiesenen Zeitschlitz gesendet haben, werten die Steuervorrichtungen die Testempfangssignale aller Netzvorrichtungen aus. Eine einfache Möglichkeit zur Auswertung besteht darin, den Störabstand über der Frequenz an jeder Netzvorrichtung zu berechnen.

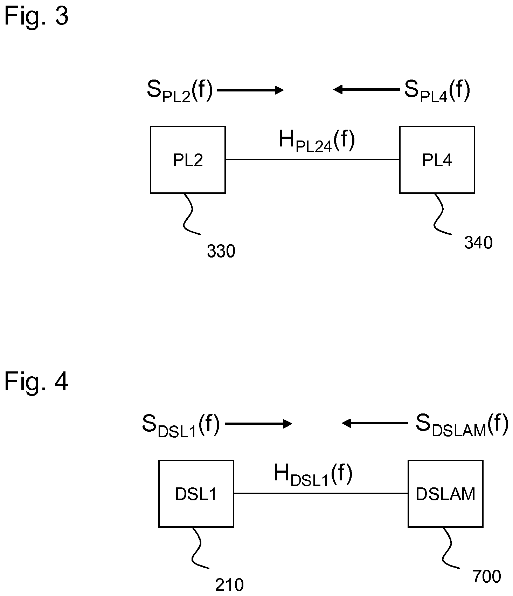

In den Figuren 3 und 4 ist für zwei Beispiele dargestellt, welche Signalleistungsdichte S(f) und welche Kanalübertragungsfunktion H(f) zur Berechnung des Störabstandes verwendet werden kann.

In Fig. 3 ist der Kommunikationskanal zwischen den Powerline-Modems 330 und 340 dargestellt. Die Übertragungsfunktion $H_{PL24}$ (f) des Übertragungskanals zwischen den Powerline-Modems 330 und 340 wird typischerweise bei der Initialisierung des Kommunikationskanals durch die Powerline-Modems 330 und 340 ermittelt. In der folgenden Beschreibung wird davon ausgegangen, dass die Übertragungsfunktion $H_{PL24}$ (f) des Übertragungskanals zwischen den Powerline-Modems 330 und 340 für beide Übertragungsrichtungen gleich ist. Die zur Berechnung des Störabstandes für das Powerline-Modem 330 verwendete Signalleistungsdichte $S_{PL4}$ (f) ist die für die Testsendung durch das Powerline-Modem 340 ausgesendete Signalleistungsdichte. Mit anderen Worten, es werden die von dem Powerline-Modem 340 an die zugeordnete Steuervorrichtung 110 gemeldete Testsendeleistungsdichte und Übertragungsfunktion verwendet. Zur Berechnung des Störabstandes für das Powerline-Modem 330 zur Erkennung eines Störeinflusses durch beispielsweise das im anderen Kommunikationsnetzwerk angeordneten DSL-Modem 210 wird die Störleistungsdichte $N_{PL2}^{DSL1}$ (f) verwendet, die das Powerline-Modem 330 während der Testaussendung durch das DSL-Modem 210 empfängt. Als Störabstand für das Powerline-Modem 330 zur Erkennung eines Störeinflusses durch das DSL-Modem 210 ergibt sich somit

$$\frac{S_{PL4}(f) * H_{PL24}(f)}{N_{PL2}^{DSL1}(f)} \quad (1)$$

Als Störabstand für das Powerline-Modem 340 zur Erkennung eines Störeinflusses durch das DSL-Modem 210 ergibt sich analog

$$\frac{S_{PL2}(f) * H_{PL24}(f)}{N_{PL4}^{DSL1}(f)} \quad (2)$$

In Fig. 4 ist der Kommunikationskanal zwischen dem DSL-Modem 210 und dem zugeordneten DSLAM 700 dargestellt. Die Übertragungsfunktion $H_{DSL1}$ (f) des Übertragungskanals zwischen DSL-Modem 210 und DSLAM 700 wird beim Aufbau des Kommunikationskanals durch das DSL-Modem ermittelt. Als Störabstand für das DSL-Modem 210 zur Erkennung eines Störeinflusses beispielsweise durch das Powerline-Modem 330 ergibt sich analog zu den obigen Ausführungen

$$\frac{S_{DSLAM}(f) * H_{DSL1}(f)}{N_{DSL1}^{PL2}(f)} \quad (3),$$

wobei $N_{DSL1}^{PL2}$ (f) die Störleistungsdichte bezeichnet, die das DSL-Modem 210 während der Testaussendung durch das Powerline-Modem 330 empfängt.

Liegt der jeweilige Störabstand unter einem vorgegebenen Schwellwert, wird ein Störeinfluss durch die jeweilige störende Netzvorrichtung erkannt, d.h. bezüglich des Störabstandes (1) oder (2) durch das DSL-Modem 210 und bezüglich des Störabstandes (3) durch das Powerline-Modem 330. Der jeweilige Schwellwert wird vorzugsweise so festgelegt, dass bei einem Störabstand oberhalb des Schwellwertes eine im Wesentlichen ungestörte Kommunikation über den Kommunikationskanal der jeweiligen Netzvorrichtung möglich ist. Vorzugsweise wird vor der Festlegung des Schwellwertes durch einen Vergleich der jeweiligen Störleistungsdichte mit der bei der Referenzmessung ermittelten Empfangsleistungsdichte geprüft, ob und in welchen Frequenzbereichen ein möglicher Störeinfluss vorliegt. Vorteilhaft erfolgt eine Berechnung von Störabständen nur für die Frequenzbereiche, für die mittels eines solchen Vergleiches ein möglicher Störeinfluss festgestellt wird.

Die Steuervorrichtungen 110 und 120 berechnen vorzugsweise für jede ihr zugeordnete Netzvorrichtung einen Störabstand bezüglich jeder anderen Netzvorrichtung, die als Störer wirken könnte. Ohne Berücksichtigung der Netzvorrichtungen 410 und 420, die über WLAN kommunizieren, berechnet beispielsweise die Steuervorrichtung 110 für das DSL-Modem 110 die Störabstände

$$\frac{S_{DSLAM}(f) * H_{DSL1}(f)}{N_{DSL1}^{PL1}(f)}, \quad \frac{S_{DSLAM}(f) * H_{DSL1}(f)}{N_{DSL1}^{PL2}(f)}, \quad \frac{S_{DSLAM}(f) * H_{DSL1}(f)}{N_{DSL1}^{PL3}(f)},$$

$$\frac{S_{DSLAM}(f) * H_{DSL1}(f)}{N_{DSL1}^{PL4}(f)}, \quad \text{und} \quad \frac{S_{DSLAM}(f) * H_{DSL1}(f)}{N_{DSL1}^{DSL2}(f)}$$

und die Steuervorrichtung 120 berechnet beispielsweise für das Powerline-Modem 330 die Störabstände

$$\frac{S_{PL4}(f) * H_{PL24}(f)}{N_{PL2}^{DSL1}(f)}, \quad \frac{S_{PL4}(f) * H_{PL24}(f)}{N_{PL2}^{DSL2}(f)}, \quad \frac{S_{PL4}(f) * H_{PL24}(f)}{N_{PL2}^{PL1}(f)}, \quad \frac{S_{PL4}(f) * H_{PL24}(f)}{N_{PL2}^{PL3}(f)},$$

und

$$\frac{S_{PL4}(f) \; * \; H_{PL24}(f)}{N_{PL2}^{PL4}(f)} \; ,$$

wobei $N_x^y$ (f) jeweils die Störleistungsdichte bezeichnet, welche die Netzvorrichtung x während der Testaussendung durch die Netzvorrichtung y empfängt. Die Störabstände für die übrigen Netzvorrichtungen werden in analoger Weise berechnet.

Vorzugsweise wird bei Erkennen eines Störeinflusses die Sendeleistungsdichte der störenden Netzvorrichtung um den Betrag in dB reduziert, um den der Störabstand unter dem Schwellwert liegt. Der so ermittelte Reduktionsbetrag kann vorteilhaft noch in Abhängigkeit des Ergebnisses der Referenzmessung angepasst werden. Alternativ kann auch der Schwellwert in Abhängigkeit des Ergebnisses der Referenzmessung festgelegt werden.

Die Regelung, welche Sendeeinheit ihre Sendeleistungsdichte um wie viel reduzieren soll, kann sich vorteilhaft nach einer festgelegten Policy richten, die zum Beispiel bestimmte Netzvorrichtungen priorisieren kann. Beispielsweise kann es vorteilhaft sein, diejenigen Netzvorrichtungen zu priorisieren, welche die Anbindung an das WAN bereitstellen, wie zum Beispiel DSL-Modems. Die Policy sollte als faire Policy vorgegeben werden. Dies kann zum Beispiel bedeuten, dass Netzvorrichtungen mit gleicher Priorität, die ihre Sendeleistung reduzieren sollen, eine Leistungsreduktion in ähnlicher Größenordnung erfolgt, und dass Leistungsreduktionen vermieden werden, die zu einem Kommunikationsausfall störender Netzvorrichtungen führen würden.

Schritt 5:

Die Steuervorrichtungen weisen die betroffenen Netzvorrichtungen an, die Sendeleistungsdichte in einem bestimmten Frequenzbereich um einen bestimmten Wert in dB zu reduzieren. In dem in Fig. 2 dargestellten Beispiel werden die Powerline-Modems PL1 und PL2 über Signale 690 bzw. 695 zur Reduktion ihrer Sendeleistungsdichte aufgefordert.

Der Testdurchlauf, d.h. der gesamte in Fig. 2 dargestellte Ablauf, wird vorzugsweise immer dann wiederholt, wenn sich eine neue Netzvorrichtung bei den Steuervorrichtungen anmeldet oder wenn sich eine abmeldet. Außerdem können die Schritte 2 bis 5 des Verfahrens auf Anforderung einer Netzvorrichtung wiederholt werden, damit auf sich verändernde Frequenzgänge, zum Beispiel durch Schalten im 230-V-Netz, reagiert werden kann. Wenn eine Wiederholungsmessung ergibt, dass eine Reduzierung der Sendeleistungsdichte nicht mehr notwendig ist, zum Beispiel, wenn ein gestörtes System nicht mehr aktiv ist, kann die Reduzierung aufgehoben werden, d.h. die Sendeleistungsdichte wieder erhöht werden.

Nochmals bezugnehmend auf das in Fig. 1 beispielhaft dargestellte Kommunikationssystem sei angemerkt, dass die Steuervorrichtungen 110 bzw. 120 vorteilhaft in dem jeweiligen DSL-Modem 210 bzw. 220 integriert sein könnte. In dem in Fig. 1 dargestellten Beispiel erfolgt die Kommunikation zwischen den Steuervorrichtungen 110 und 120 über das Stromnetz als einziges verbindendes Netz im Gebäude. Es sei angemerkt, dass die beiden Steuervorrichtungen 110 und 120 durch eine einzige Steuervorrichtung ersetzt werden könnten, wenn diese zum Beispiel im Keller am Hausverteiler des WAN installiert und ans Stromnetz angeschlossen wird.

## Patentansprüche

1.  Verfahren zur Verringerung von Störeinflüssen zwischen Netzvorrichtungen (210, 220, 310-340, 410, 420), umfassend die Schritte:

    - Aussenden eines Testsignals (640) durch wenigstens eine erste Netzvorrichtung (310),
    - Detektieren des Testsignals durch wenigstens eine zweite Netzvorrichtung (210, 220, 320, 330, 340, 410, 420),
    - Erkennen eines Störeinflusses der ersten Netzvorrichtung (310) auf die zweite Netzvorrichtung durch wenigstens eine zugeordnete Steuervorrichtung (110, 120) in Abhängigkeit des durch die zweite Netzvorrichtung detektierten Testsignals,
    - Bewirken einer Reduzierung einer Sendeleistung (690) der ersten Netzvorrichtung (310) durch die wenigstens eine zugeordnete Steuervorrichtung (110, 120) in Abhängigkeit des erkannten Störeinflusses.

2.  Verfahren nach Anspruch 1, wobei die erste und zweite Netzvorrichtung jeweils an separate Kommunikationsnetzwerke (510, 520) angeschlossen und derart angeordnet sind, dass sie nicht miteinander kommunizieren können, und wobei an jedes der separaten Kommunikationsnetzwerke (510, 520) jeweils eine Steuervorrichtung (110, 120) angeschlossen ist, welche den an das jeweilige Kommunikationsnetzwerk angeschlossenen Netzvorrichtungen zugeordnet ist, und die Steuervorrichtungen (110, 120) derart angeordnet sind, dass sie miteinander kommunizieren können.

3. Verfahren nach Anspruch 2, wobei jede der Steuervorrichtungen (110, 120) zugeordnete Netzvorrichtungen automatisch erkennt, die jeweils an das gleiche Kommunikationsnetzwerk (510, 520) angeschlossen sind, und wobei die Steuervorrichtungen (110, 120) untereinander Informationen zu jeweils erkannten Netzvorrichtungen austauschen.

4. Verfahren nach Anspruch 3, wobei das Erkennen einer Netzvorrichtung durch eine zugeordnete Steuervorrichtung unter Ansprechen auf ein von der jeweiligen Netzvorrichtung gesendetes Registrierungssignal erfolgt.

5. Verfahren nach einem der Ansprüche 2 bis 4, wobei die Steuervorrichtungen (110, 120) eine wechselseitige Synchronisierung durchführen.

6. Verfahren nach einem der vorstehenden Ansprüche, wobei das Aussenden des Testsignals (640) durch die wenigstens eine erste Netzvorrichtung (310) unter Ansprechen auf ein von der jeweils zugeordneten Steuervorrichtung (110) empfangenes Aufforderungssignal zum Aussenden eines Testsignals (630) erfolgt, und wobei das Detektieren des Testsignals durch die wenigstens eine zweite Netzvorrichtung (210, 220, 320, 330, 340, 410, 420) unter Ansprechen auf ein von der jeweils zugeordneten Steuervorrichtung (110) empfangenes Aufforderungssignal zum Ausführen eines Testempfangs erfolgt.

7. Verfahren nach einem der vorstehenden Ansprüche, wobei das Aussenden des Testsignals (640) durch die wenigstens eine erste Netzvorrichtung (310) ein Aussenden eines Testsignals in einem vordefinierten Zeitfenster und mit einer vorgegebenen spektralen Sendeleistungsdichte umfasst, und wobei das Detektieren des Testsignals durch die wenigstens eine zweite Netzvorrichtung (210, 220, 320, 330, 340, 410, 420) das Unterbinden von Aussendungen und Detektieren einer spektralen Empfangsleistungsdichte in dem vordefinierten Zeitfenster umfasst.

8. Verfahren nach Anspruch 7, wobei das Zeitfenster eine Dauer zwischen 1 und 10 Millisekunden aufweist.

9. Verfahren nach Anspruch 7 oder 8, wobei die wenigstens eine erste Netzvorrichtung (310) Informationen über die spektrale Sendeleistungsdichte des ausgesendeten Testsignals und/oder Informationen über eine spektrale Übertragungsfunktion eines Übertragungskanals zwischen der ersten Netzvorrichtung und wenigstens einer weiteren Netzvorrichtung zu der jeweils zugeordneten Steuervorrichtung überträgt.

10. Verfahren nach einem der Ansprüche 7 bis 9, wobei jede der zweiten Netzvorrichtungen Informationen über die jeweils detektierte spektrale Empfangsleistungsdichte zu der jeweils zugeordneten Steuervorrichtung überträgt, und wobei das Erkennen eines Störeinflusses durch die wenigstens eine Steuervorrichtung in Abhängigkeit der empfangenen Informationen über detektierte spektrale Empfangsleistungsdichten der Netzvorrichtungen erfolgt.

11. Verfahren nach Anspruch 10, wobei die Steuervorrichtungen (110, 120) untereinander die jeweils empfangenen Informationen über gesendete spektrale Sendeleistungsdichten und/oder spektrale Übertragungsfunktionen und/oder detektierte spektrale Empfangsleistungsdichten der jeweils zugeordneten Netzvorrichtungen austauschen.

12. Verfahren nach einem der vorstehenden Ansprüche, wobei zum Bewirken einer Reduzierung der Sendeleistung (690) der ersten Netzvorrichtung (310) durch die wenigstens eine Steuervorrichtung (110, 120) in Abhängigkeit des erkannten Störeinflusses ein Aufforderungssignal zur Leistungsreduktion von der jeweils zugeordneten Steuervorrichtung (110) zu der ersten Netzvorrichtung (310) übertragen wird, und die erste Netzvorrichtung (310) unter Ansprechen auf das empfangene Aufforderungssignal zur Leistungsreduktion (690) die Sendeleistung im Kommunikationsbetrieb in einem definierten Frequenzbereich um ein festgelegtes Maß reduziert.

13. Verfahren nach Anspruch 12, wobei zum Festlegen des Maßes der Leistungsreduktion durch die zugeordnete Steuervorrichtung ein Störabstand ermittelt und mit einem vorgegebenen Schwellwert verglichen wird.

14. Verfahren nach einem der vorstehenden Ansprüche, wobei jede der Netzvorrichtungen unter Ansprechen auf ein von der jeweils zugeordneten Steuervorrichtung empfangenes Aufforderungssignal eine Referenzmessung des spektralen Störhintergrundes durchführt und das Ergebnis der jeweils zugeordneten Steuervorrichtung übermittelt, wobei während der Referenzmessung keine der Netzvorrichtungen eine Aussendung durchführt.

15. Verfahren nach einem der vorstehenden Ansprüche, wobei die erste und die zweite Netzvorrichtung jeweils zur Kommunikation auf unterschiedlichen Übertragungsmedien ausgebildet sind.

16. Verfahren nach einem der vorstehenden Ansprüche, wobei nacheinander jede einer Mehrzahl von Netzvorrichtungen ein Testsignal aussendet, wobei während des Aussendens durch die jeweilige Netzvorrichtung die übrigen der Mehrzahl von Netzvorrichtungen jeweils ihren Signalempfang überwachen und selbst keine Aussendung durchführen.

17. Netzvorrichtung, ausgebildet zum Ausführen eines Verfahrens gemäß einem der Ansprüche 1 bis 16, umfassend

   - eine erste Kommunikationsschnittstelle zur Kommunikation mit anderen, an ein gemeinsames Kommunikationsnetzwerk angeschlossenen Netzvorrichtungen,
   - eine zweite Kommunikationsschnittstelle zur Kommunikation mit einer Steuervorrichtung,

   wobei die Netzvorrichtung dazu ausgebildet ist, unter Ansprechen auf Steuersignale, welche die Netzvorrichtung von der Steuervorrichtung über die zweite Kommunikationsschnittstelle empfängt, Testsignale über die erste Kommunikationsschnittstelle auszusenden und/oder von einer anderen Netzvorrichtung ausgesendete Testsignale über die erste Kommunikationsschnittstelle zu detektieren.

18. Steuervorrichtung (110, 120), ausgebildet zum Ausführen eines Verfahrens gemäß einem der Ansprüche 1 bis 16, umfassend eine erste Kommunikationsschnittstelle zur Kommunikation mit Netzvorrichtungen in einem Kommunikationsnetzwerk, wobei die Steuervorrichtung dazu ausgebildet ist,

   - ein Aussenden eines Testsignals durch eine erste Netzvorrichtung zu bewirken,
   - einen Störeinfluss der ersten Netzvorrichtung auf eine zweite Netzvorrichtung in Abhängigkeit eines durch die zweite Netzvorrichtung detektierten Testsignals zu erkennen, und
   - eine Reduzierung einer Sendeleistung (690) der ersten Netzvorrichtung (310) in Abhängigkeit des erkannten Störeinflusses zu bewirken.

19. Steuervorrichtung gemäß Anspruch 18, umfassend

   - eine zweite Kommunikationsschnittstelle zur Kommunikation mit einer weiteren Steuervorrichtung, welche nicht an dasselbe Kommunikationsnetzwerk angeschlossen ist.

20. Kommunikationssystem, umfassend wenigstens zwei Netzvorrichtungen gemäß Anspruch 17 und wenigstens eine Steuervorrichtung gemäß einem der Ansprüche 18 oder 19.

**Claims**

1. A method of reducing interference between network devices (210, 220, 310-340, 410, 420), comprising the steps of:

   - transmitting a test signal (640), by at least one first network device (310);
   - detecting the test signal, by at least one second network device (210, 220, 320, 330, 340, 410, 420);
   - identifying an interference of the first network device (310) to the second network device, by at least one associated control device (110, 120) based on the test signal detected by the second network device;
   - causing a reduction of transmission power (690) of the first network device (310), by the at least one associated control device (110, 120) based on the identified interference.

2. The method according to claim 1, wherein the first and second network devices are connected to respective separate communication networks (510, 520) and are arranged such that they are not able to communicate with each other, and wherein each of the separate communication networks (510, 520) has a respective control device (110, 120) connected thereto, which is associated with the network devices connected to the respective communication network, and wherein the control devices (110, 120) are arranged such that they are able to communicate with each other.

3. The method according to claim 2, wherein each of the control devices (110, 120) automatically detects associated network devices which are connected to the same communication network (510, 520), and wherein the control devices (110, 120) exchange with each other information about each detected network device.

4. The method according to claim 3, wherein the detecting of a network device by an associated control device is effected in response to a registration signal transmitted by the respective network device.

5. The method according to any one of claims 2 to 4, wherein the control devices (110, 120) perform mutual synchronization.

6. The method according to any one of the preceding claims, wherein the transmitting of the test signal (640) by the at least one first network device (310) is effected in response to a request signal (630) for transmitting a test signal as received from the respective associated control device (110); and wherein the detecting of the test signal by the at least one second network device (210, 220, 320, 330, 340, 410, 420) is effected in response to a request signal for performing a test reception as received from the respective associated control device (110).

7. The method according to any one of the preceding claims, wherein the transmitting of the test signal (640) by the at least one first network device (310) comprises transmitting a test signal in a predefined time window and with a predetermined spectral transmission power density; and wherein the detecting of the test signal by the at least one second network device (210, 220, 320, 330, 340, 410, 420) comprises inhibiting transmissions and detecting a spectral reception power density in the predefined time window.

8. The method according to claim 7, wherein the time window has a duration between 1 and 10 milliseconds.

9. The method according to claim 7 or 8, wherein the at least one first network device (310) transfers, to the respective associated control device, information about the spectral transmission power density of the transmitted test signal and/or information about a spectral transfer function of a transfer channel between the first network device and at least one further network device.

10. The method according to any one of claims 7 to 9, wherein each of the second network devices transfers information about the respective detected spectral reception power density to the respective associated control device; and wherein the detecting of an interference by the at least one control device is effected based on the received information about detected spectral reception power densities of the network devices.

11. The method according to claim 10, wherein the control devices (110, 120) exchange with each other the respective received information about transferred spectral transmission power densities and/or spectral transfer functions and/or detected spectral reception power densities of the respective associated network devices.

12. The method according to any one of the preceding claims, wherein for causing a reduction of the transmission power (690) of the first network device (310) by the at least one control device (110, 120) in response to the detected interference, a power reduction request signal is transmitted from the respective associated control device (110) to the first network device (310); and wherein the first network device (310) responds to the received power reduction request signal (690) by reducing the transmission power in the communication mode in a defined frequency range by a predefined degree.

13. The method according to claim 12, wherein for defining the degree of power reduction by the associated control device, a signal-to-noise ratio is determined and compared with a predefined threshold value.

14. The method according to any one of the preceding claims, wherein each of the network devices responds to a request signal received from the respective associated control device by performing a reference measurement of the spectral background noise and by transmitting the result to the respective associated control device, wherein during the reference measurement, none of the network devices performs a transmission.

15. The method according to any one of the preceding claims, wherein the first and second network devices are each adapted for communication on different transmission media.

16. The method according to any one of the preceding claims, wherein each one of a plurality of network devices transmits a test signal, one after the other, wherein during the transmission by the respective network device the other ones of the plurality of network devices each monitor their signal reception and do not perform any transmission themselves.

17. A network device, configured for carrying out a method according to any one of claims 1 to 16, comprising

   - a first communication interface for communication with other network devices connected to a common communication network;
   - a second communication interface for communication with a control device;

   wherein the network device is configured to respond to control signals which the network device receives from the control device via the second communication interface by transmitting test signals via the first communication interface and/or by detecting test signals transmitted by another network device via the first communication interface.

18. A control device (110, 120) configured for carrying out a method according to any one of claims 1 to 16, comprising a first communication interface for communicating with network devices in a communication network, wherein the control device is adapted to:

   - cause a first network device to transmit a test signal;
   - identify an interference of the first network device to a second network device based on a test signal detected by the second network device; and
   - cause a reduction of a transmission power (690) of the first network device (310) based on the identified interference.

19. The control device according to claim 18, comprising

   - a second communication interface for communication with a further control device which is not connected to the same communication network.

20. A communication system, comprising at least two network devices according to claim 17 and at least one control device according to any one of claims 18 or 19.


**Revendications**

1. Procédé pour réduire des influences parasites entre des dispositifs de réseau (210, 220, 310-340, 410, 420), comportant les étapes :

   - d'émission d'un signal d'essai (640) par au moins un premier dispositif de réseau (310),
   - de détection du signal d'essai par au moins un deuxième dispositif de réseau (210, 220, 320, 330, 340, 410, 420),
   - de repérage d'une influence parasite du premier dispositif de réseau (310) sur le deuxième dispositif de réseau par au moins un dispositif de commande (110, 120) associé en fonction du signal d'essai détecté par le deuxième dispositif de réseau,
   - de réalisation d'une réduction d'une puissance d'émission (690) du premier dispositif de réseau (310) par l'au moins un dispositif de commande (110, 120) associé en fonction de l'influence parasite repérée.

2. Procédé selon la revendication 1, dans lequel le premier et le deuxième dispositif de réseau sont raccordés chacun à des réseaux de communication (510, 520) séparés et agencés de manière à ne pas pouvoir communiquer les uns avec les autres, et dans lequel respectivement un dispositif de commande (110, 120), lequel est associé aux dispositifs de réseau raccordés au réseau de communication respectif, est raccordé à chacun des réseaux de communication (510, 520) séparés, et les dispositifs de commande (110, 120) sont agencés de manière à pouvoir communiquer les uns avec les autres.

3. Procédé selon la revendication 2, dans lequel chacun des dispositifs de commande (110, 120) repère automatiquement les dispositifs de réseau associés qui sont raccordés respectivement au même réseau de communication (510, 520), et dans lequel les dispositifs de commande (110, 120) s'échangent des informations envoyées aux dispositifs de réseau respectivement repérés.

4. Procédé selon la revendication 3, dans lequel le repérage d'un dispositif de réseau par un dispositif de commande associé s'effectue en réponse à un signal d'enregistrement émis par le dispositif de réseau respectif.

5. Procédé selon l'une quelconque des revendications 2 à 4, dans lequel les dispositifs de commande (110, 120) effectuent une synchronisation alternée.

6. Procédé selon l'une quelconque des revendications précédentes, dans lequel l'émission du signal d'essai (640) par l'au moins un premier dispositif de réseau (310) s'effectue en réponse à un signal, reçu par le dispositif de commande (110) respectivement associé, de demande d'émission d'un signal d'essai (630), et dans lequel la détection du signal d'essai par l'au moins un deuxième dispositif de réseau (210, 220, 320, 330, 340, 410, 420) s'effectue en réponse à un signal, reçu par le dispositif de commande (110) respectivement associé, de demande de mise en oeuvre d'une réception d'essai.

7. Procédé selon l'une quelconque des revendications précédentes, dans lequel l'émission du signal d'essai (640) par l'au moins un premier dispositif de réseau (310) comporte une émission d'un signal d'essai dans une fenêtre temporelle prédéfinie et à une densité de puissance d'émission spectrale prédéfinie, et dans lequel la détection du signal d'essai par l'au moins un deuxième dispositif de réseau (210, 220, 320, 330, 340, 410, 420) comporte l'interruption des émissions et la détection d'une densité de puissance de réception spectrale dans la fenêtre temporelle prédéfinie.

8. Procédé selon la revendication 7, dans lequel la fenêtre temporelle présente une durée comprise entre 1 et 10 millisecondes.

9. Procédé selon la revendication 7 ou 8, dans lequel l'au moins un premier dispositif de réseau (310) transmet des informations concernant la densité de puissance d'émission spectrale du signal d'essai émis et/ou des informations concernant une fonction de transmission spectrale d'un canal de transmission entre le premier dispositif de réseau et au moins un autre dispositif de réseau au dispositif de commande respectivement associé.

10. Procédé selon l'une quelconque des revendications 7 à 9, dans lequel chacun des deuxièmes dispositifs de réseau transmet des informations concernant la densité de puissance de réception spectrale respectivement détectée au dispositif de commande respectivement associé, et dans lequel le repérage d'une influence parasite par l'au moins un dispositif de commande s'effectue en fonction des informations reçues concernant les densités de puissance de réception spectrale détectées des dispositifs de réseau.

11. Procédé selon la revendication 10, dans lequel les dispositifs de commande (110, 120) s'échangent les informations respectivement reçues concernant les densités de puissance d'émission spectrale et/ou les fonctions de transmission spectrale émises et/ou les densités de puissance de réception spectrale détectées des dispositifs de réseau respectivement associés.

12. Procédé selon l'une quelconque des revendications précédentes, dans lequel, pour réaliser une réduction de la puissance d'émission (690) du premier dispositif de réseau (310) par l'au moins un dispositif de commande (110, 120) en fonction de l'influence parasite repérée, un signal de demande de réduction de puissance est transmis par le dispositif de commande (110) respectivement associé au premier dispositif de réseau (310), et le premier dispositif de réseau (310), en réponse au signal de demande de réduction de puissance (690) reçu, réduit la puissance d'émission d'une grandeur définie en mode communication dans une plage de fréquences définie.

13. Procédé selon la revendication 12, dans lequel, pour définir la grandeur de la réduction de puissance par le dispositif de commande associé, un rapport signal bruit est déterminé et comparé à une valeur seuil prédéfinie.

14. Procédé selon l'une quelconque des revendications précédentes, dans lequel chacun des dispositifs de réseau, en réponse à un signal de demande reçu par le dispositif de commande respectivement associé, réalise une mesure de référence du fond parasite spectral et transmet le résultat au dispositif de commande respectivement associé, dans lequel aucun des dispositifs de réseau ne réalise d'émission pendant la mesure de référence.

15. Procédé selon l'une quelconque des revendications précédentes, dans lequel le premier et le deuxième dispositif de réseau sont conçus chacun pour communiquer sur différents supports de transmission.

16. Procédé selon l'une quelconque des revendications précédentes, dans lequel chacun d'une pluralité de dispositifs de réseau émet successivement un signal d'essai, dans lequel, pendant l'émission par le dispositif de réseau respectif, les autres de la pluralité de dispositifs de réseau surveillent chacun leur réception de signal et n'exécutent eux-mêmes aucune émission.

17. Dispositif de réseau, conçu pour mettre en oeuvre un procédé selon l'une quelconque des revendications 1 à 16, comportant :

- une première interface de communication aux fins de communication avec d'autres dispositifs de réseau raccordés à un réseau de communication commun,
- une deuxième interface de communication aux fins de communication avec un dispositif de commande,

où le dispositif de réseau est conçu, en réponse à des signaux de commande que le dispositif de réseau reçoit du dispositif de commande par l'intermédiaire de la deuxième interface de communication, pour émettre des signaux d'essai par l'intermédiaire de la première interface de communication et/ou pour détecter des signaux d'essai émis par un autre dispositif de réseau par l'intermédiaire de la première interface de communication.

18. Dispositif de commande (110, 120), conçu pour mettre en oeuvre un procédé selon l'une quelconque des revendications 1 à 16, comportant une première interface de communication aux fins de communication avec les dispositifs de réseau dans un réseau de communication, où le dispositif de commande est conçu :

- pour réaliser une émission d'un signal d'essai au moyen d'un premier dispositif de réseau,
- pour repérer une influence parasite du premier dispositif de réseau sur un deuxième dispositif de réseau en fonction d'un signal d'essai détecté par le deuxième dispositif de réseau, et
- pour provoquer une réduction d'une puissance d'émission (690) du premier dispositif de réseau (310) en fonction de l'influence parasite repérée.

19. Dispositif de commande selon la revendication 18, comportant :

- une deuxième interface de communication aux fins de communication avec un autre dispositif de commande, lequel n'est pas raccordé au même réseau de communication.

20. Système de communication, comportant au moins deux dispositifs de réseau selon la revendication 17 et au moins un dispositif de commande selon l'une quelconque des revendications 18 ou 19.

# Fig. 1

# Fig. 2

Fig. 3

$S_{PL2}(f)$ ⟶        ⟵ $S_{PL4}(f)$

| PL2 | $H_{PL24}(f)$ | PL4 |

330                                    340

Fig. 4

$S_{DSL1}(f)$ ⟶        ⟵ $S_{DSLAM}(f)$

| DSL1 | $H_{DSL1}(f)$ | DSLAM |

210                                    700

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2744117 A1
- WO 2012084221 A
- WO 2009039439 A
- EP 2774117 A1